Europäisches Patentamt

(19) European Patent Office

Office européen des brevets

(11) Veröffentlichungsnummer: **0 071 661**
**B1**

(12) **EUROPÄISCHE PATENTSCHRIFT**

(45) Veröffentlichungstag der Patentschrift:
**20.11.86**

(21) Anmeldenummer: **81106153.0**

(22) Anmeldetag: **06.08.81**

(51) Int. Cl.⁴: **G 06 K 15/08,** G 06 F 3/12 //
G05B19/04

(54) **Steuereinrichtung für einen Zeilendrucker mit einem umlaufenden Zeichenträger und mehreren Druckhämmern.**

(43) Veröffentlichungstag der Anmeldung:
**16.02.83 Patentblatt 83/7**

(45) Bekanntmachung des Hinweises auf die Patenterteilung:
**20.11.86 Patentblatt 86/47**

(84) Benannte Vertragsstaaten:
**BE CH DE FR GB IT LI NL**

(56) Entgegenhaltungen:
**EP - A - 0 033 069**
**GB - A - 2 052 813**
**US - A - 3 444 529**
**US - A - 4 048 625**
**US - A - 4 218 754**

**IBM TECHNICAL DISCLOSURE BULLETIN, Band 10, No. 6, November 1967 ARMONK, N.Y. (US) M.J. Mitchell u.a.:**
**"Printer Character Set Control", Seite 709**

(73) Patentinhaber: **IBM DEUTSCHLAND GMBH,**
**Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **BE CH FR GB IT LI NL**

(72) Erfinder: **Barthel, Jan, Ulmenstrasse 14,**
**D-7031 Holzgerlingen (DE)**
Erfinder: **Bublitz, Hermann R., Genkerstrasse 35,**
**D-7030 Böblingen (DE)**

(74) Vertreter: **Blutke, Klaus, Dipl.-Ing., Schönaicher Strasse 220, D-7030 Böblingen (DE)**

## Beschreibung

Die Erfindung betrifft eine Steuereinrichtung für einen Zeilendrucker mit einem umlaufenden Zeichenträger und mit den einzelnen Druckpositionen zugeordneten Druckhämmern, und mit einem von einem Mikroprozessor ladbaren Speicher für die Druckhammersteuerinformation, wobei Druckhämmer und Zeichen eine unterschiedliche Teilung aufweisen und die Zeichenposition auf dem Zeichenträger durch die Entfernung der Zeichen gegenüber einer Referenzmarke HPB auf dem Zeichenträger festgelegt ist und die Verschiebung x des umlaufenden Zeichenträgers gegenüber einem feststehenden Referenzpunkt am Druckerrahmen als Abstand der Referenzmarkierung HPB auf dem Zeichenträger zu einer Referenzmarkierung HPF auf dem Druckerrahmen bestimmbar ist.

Bei Schnelldruckern mit umlaufenden Typenträgern – wie Ketten oder Bändern – und den einzelnen Druckpositionen zugeordneten Druckbetätigungsgliedern, z.B. Druckhämmern, müssen für eine zeilenweise Informationsausgabe die Druckzeitpunkte der einzelnen Druckhämmer festgelegt werden. Diese Festlegung erfolgt in Abhängigkeit von den an den einzelnen Positionen abzudruckenden Zeichen.

Derartige Drucksteuerungen gehen zweckmässigerweise von einer Druckhammerteilung aus, die geringfügig kleiner als die Teilung der Zeichen auf dem umlaufenden Typenträger ist. Die Ursache für diese geringfügig unterschiedlichen Teilungen ist darin zu sehen, dass vor dem Betätigen eines Druckhammers elektronische Vergleiche ablaufen, die eine wenn auch geringe Zeit beanspruchen. Drucksteuerungen dieser Art werden zeitlich gesehen in bestimmte Zeitfolgen aufgeteilt.

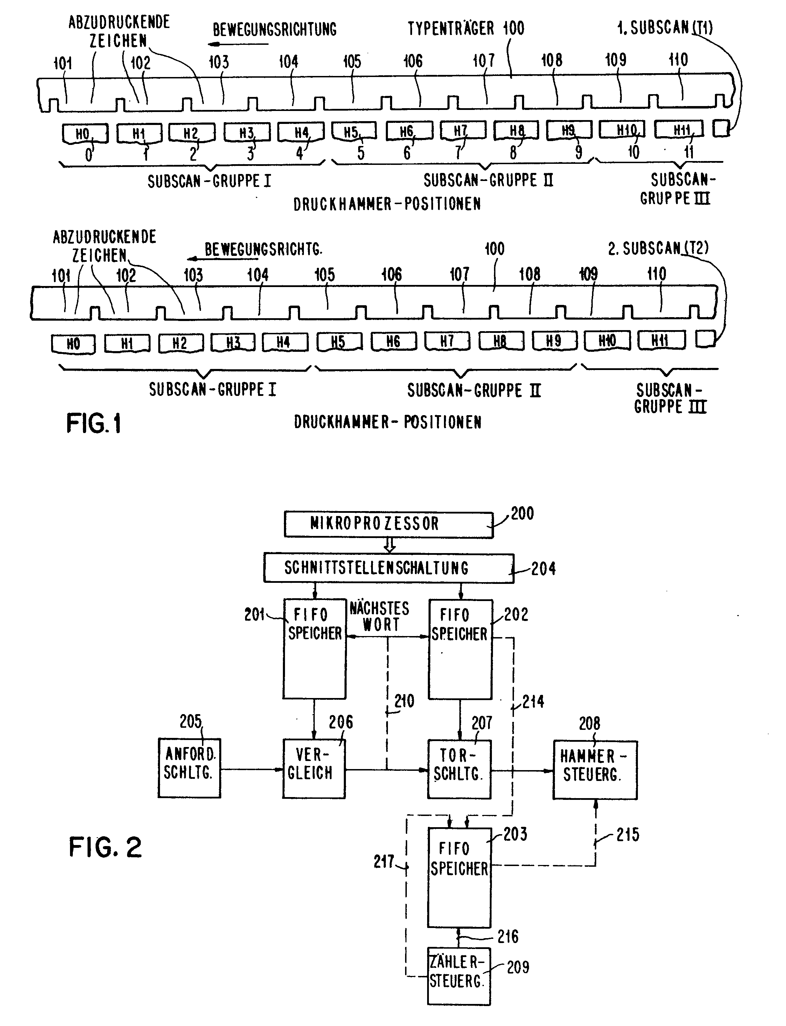

Ein Prinzip dieser Ablauffolge ist in Fig. 1 wiedergegeben. Die Druckhammerpositionen sind mit 0 bis 11 gekennzeichnet; die zugehörigen Druckhämmer mit H0 bis H11. Jede Druckhammerposition entspricht einer Druckposition auf dem gedachten (nicht dargestellten) Aufzeichnungsträger. Beim Abdruck eines Zeichens wird ein Druckhammer in Richtung des Typenträgers betätigt, dabei gelangt das dem Druckhammer gerade gegenüberstehende Zeichen auf einem Aufzeichnungsträger zum Abdruck. Die Zeichen sind auf einem in Pfeilrichtung umlaufenden Typenträger 100 angebracht. Die Teilung der Druckhämmer ist kleiner als die der Zeichen auf dem Typenträger 100. Mit anderen Worten: in dem gezeigten Ausführungsbeispiel gemäss Fig. 1 entfallen auf den Bereich fünf nebeneinanderliegender Druckhämmer, z.B. H0 bis H4, vier nebeneinanderliegende Zeichen 101 bis 104.

Zu dem in Fig. 1 dargestellten Zeitpunkt liegen somit den Druckhämmern H0, H5, H10 etc. die Zeichen 101, 105, 109 etc. gegenüber, so dass für die Druckpositionen 0, 5, 10 etc. ein Abdruck möglich wäre. Die Druckhammergruppen, in denen zu einem bestimmten Zeitpunkt einem Druckhammer dieser Gruppe ein Zeichen für einen möglichen Abdruck gegenübersteht, sei im folgenden Subscan-Gruppe genannt. Im angegebenen Beispiel umfasst die Subscan-Gruppe I die Druckhämmer H0 bis H4, die Subscan-Gruppe II, die Druckhämmer H5 bis H9, usw. Die Lage des sich in Pfeilrichtung bewegenden Typenträgers 100 gegenüber den Druckhämmern zum Zeitpunkt T1 wird als 1. Subscan bezeichnet. Zum Zeitpunkt T2 hat sich der Typenträger 100 gegenüber den Druckhämmern derart weiter bewegt, dass nunmehr dem Druckhammer H1, H6 etc. die Zeichen 102, 106 etc. für einen möglichen Abdruck gegenüberstehen. Diese Stellung zum Zeitpunkt T2 wird als 2. Subscan bezeichnet.

Auf diese Weise lässt die zeitliche Folge des Ausdruckens von Information in einer Folge verschiedener Subscan (vielfach auch Unterabtastungen genannt) aufteilen, wobei innerhalb eines Subscans in jeder Subscan-Gruppe ein Zeichen ausgedruckt werden kann.

Um die Information einer Zeile auszudrucken, müssen entsprechend der relativen Lage der Zeichen des Typenträgers gegenüber den Druckhämmern letztere immer dann erregt werden, wenn ihnen die erwünschten Zeichen gegenüberstehen. Es ist verständlich, dass eine solche Zeitsteuerung komplex ist. Die Grundlage für eine solche Zeitsteuerung bildet die in einem Speicher verfügbare auszudruckende Information.

Dabei ist festgelegt, an welchen Druckpositionen welches Zeichen auszugeben ist. Des weiteren ist in einem computergesteuerten Speicher ein elektronisches Abbild der auf dem umlaufenden Typenträger angeordneten Zeichen vorhanden, so dass zu jedem Zeitpunkt gesagt werden kann, an welche Druckposition ein bestimmtes Zeichen für einen möglichen Abdruck gerade zur Verfügung steht. Diese Aussagen basieren natürlich auf den druckerspezifischen Teilungsverhältnissen der Druckhämmer und der Zeichen auf dem Typenträger. Durch elektronische Vergleiche wird sichergestellt, in welcher Subscan-Gruppe innerhalb eines bestimmten Subscans ein gewünschtes Zeichen in einer bestimmten Druckposition abgedruckt werden kann.

Drucker, die nach den oben aufgeführten Zeitsteuerungen arbeiten, sind seit langer Zeit bekannt. In diesem Zusammenhang sei beispielsweise auf die Kettendrucker der Typs IBM 1403, IBM 3203 und die Stahlbanddrucker vom Typ IBM 3262 verwiesen.

Aus der Vielzahl bekannter Patentanmeldungen, denen die oben beschriebene Druckhammersteuerung zugrunde liegt, seien genannt:

DE-OS 2 057 675 (Docket EN 969 041)

Des weiteren sind auch sogenannte Adapterschaltungen bekannt geworden, deren Aufgabe es ist, Schnittstellen zwischen verschiedenen Schaltungseinheiten zu überbrücken. Solche Schnittstellen können dann z.B. problematisch sein, wenn in den zusammenzufügenden Einheiten unterschiedlich schnelle Datenübertragungsraten zu berücksichtigen sind. Solche Schnittstellenschaltungen für Datenverarbeitungsanlagen sind z.B. in den folgenden deutschen Patentanmeldungen beschrieben:

OS 2 719 253 (BC 976 016)

– Diese Anmeldung behandelt eine Schnittstellenschaltung, die aus einem Mikroprozessor mit eigenem Speicher gebildet wird, wobei ein Befehlsdecodierer mit dem Ausgang eines Befehlsregisters und ausserdem ausgangsseitig mit dem Eingang einer Anschlussschaltung zur Erzeugung von wenigstens drei Befehlssignalen verbunden ist.

OS 2 828 731 (PO 977 012)

– In dieser Anmeldung ist ein Kanalspeicheradapter beschrieben, der in einer Datenverarbeitungsanlage zur Anpassung zwischen einem Eingabe/Ausgabeprozessor und Zugriffeinrichtungen für den gemeinsam benutzten Hauptspeicher dient.

OS 1 916 979

– Hierin ist eine Schaltungsanordnung zur Steuerung des Datenflusses zwischen einer Datenverarbeitungseinheit und Datenspeichern bzw. Ein- und Ausgabegeräten mit relativ langsamer Zugriffs- oder Zykluszeit beschrieben.

OS 2 417 446

– Hierin ist ein Adapter zur gegenseitigen Verbindung automatischer Datenprozessoren mit peripheren Geräten beschrieben, die mit einer mikrobefehlsgesteuerten Einheit verbunden sind. Der Adapter ist zwischen einem Kanal und der mikrobefehlsgesteuerten Einheit angeordnet. Er enthält logische Schaltungen, die Signale auf einer Leitung abfühlen und die anzeigen, dass die mikrobefehlsgesteuerte Einheit nicht unterbrochen werden kann. Dadurch werden ankommende Daten auf einer Leitung zur mikrobefehlsgesteuerten Einheit gesperrt, während Kanalanforderungen durch Steuersignale, die auf bestimmten Leitungen vorliegen, erfüllt werden.

Die US-A-4 218 754 beschreibt eine Echtzeit-Steuerschaltung zur Aktivierung der Druckhämmer eines Zeilendruckers. Die Ausgangssignale für die Steuerung werden durch eine Verknüpfung von Takt- und Steuerinformationen gebildet.

Die Taktsignale (Zeitwerte) werden abhängig vom Druckvorgang des Druckers in einer Zeitsteuerungsschaltung erzeugt. Die Steuerinformationen stammen aus mehreren Schieberegistern, die von einem Mikroprozessor ladbar sind.

Bei Druckhammersteuerungen (für Band- bzw. Kettendrucker) werden u.a. zwei verschiedene Betriebsarten unterschieden. Beim «Rippleprint-Prinzip» soll innerhalb eines Subscans das gleichzeitige Feuern von Druckhämmern in verschiedenen Subscan-Gruppen verhindert werden. Dieses «Rippleprint-Prinzip» (die Bezeichnung «Rippleprint» stammt aus dem angelsächsischen Sprachgebrauch) könnte somit auch als Druckmethode für eine serielle Hammerbetätigung umschrieben werden. Sie soll einem erhöhten Energiebedarf des Druckers zu einem bestimmten Zeitpunkt entgegenwirken. Um dem «Rippleprint-Prinzip» zu genügen, wird die Hammerteilung zusätzlich vergrössert, d.h. die sonst in verschiedenen Subscan-Gruppen simultan druckenden Hämmer erhalten einen zusätzlichen Abstand.

Das «Gangfiring-Prinzip» hingegen lässt es zu, die Hämmer mehrerer Subscangruppen innerhalb eines Subscans gleichzeitig zu feuern. Der Energiebedarf ist hierbei natürlich entsprechend höher als beim «Rippleprint-Prinzip».

Die Bezeichnung «Gangfiring» ist wieder dem angelsächsischen Sprachgebrauch entnommen; sie liesse sich als eine Druckmethode umschreiben, bei der zu einem bestimmten Zeitpunkt mehrere Hämmer gleichzeitig gefeuert werden.

Bisher waren aufwendige Schaltungen für die elektronischen Vergleiche zur Druckhammersteuerung erforderlich. Diese Schaltungen sind unflexibel, da sie druckerspezifisch ausgelegt sind. Eine Anpassung an neue Druckgeschwindigkeiten, andere Zeichen- oder Druckhammerteilungen waren nur durch Änderungen dieser Schaltung möglich.

Es ist Aufgabe der Erfindung, für eine Steuerschaltung zur Aktivierung der Druckhämmer eines Zeilendruckers, die zu speichernden Informationen, insbesondere die Feuerzeitpunkte der Druckhämmer, in besonders effektiver Weise zu ermitteln.

Diese Aufgabe der Erfindung wird in vorteilhafter Weise durch die im kennzeichnenden Teil des Anspruchs 1 angegebenen Massnahmen gelöst.

Vorteilhafte Weiterbildungen der Erfindung sind den Unteransprüchen zu entnehmen.

Die Erfindung wird anhand verschiedener Darstellungen beschrieben:

Es zeigen:

Fig. 1 eine schematische Darstellung von Druckhämmern und einem an diesem vorbeilaufenden Typenträger zu verschiedenen Zeitpunkten zur Definition der Begriffe Subscan und Subscan-Gruppen;

Fig. 2 ein Blockschaltbild einer mikroprozessorgesteuerten Adapterschaltung;

Fig. 3 eine Prinzipdarstellung eines umlaufenden Typenbandes mit Zeitgabemarkierungen in Relation zu einem feststehenden Abfühlelement am Gestell des Druckers;

Fig. 4 eine schematische Darstellung einer Bezugsmarkierung auf dem Typenband in Relation zu dem Abtastelement am Gestell des Druckers;

Fig. 5 eine schematische Darstellung einer Tabelleneintragung für das Zeichen «E» für die Druckposition 0 beim Hammer H0 unter Berücksichtigung unterschiedlicher Entfernungswerte zwischen einer Bezugsmarkierung auf dem Typenband und dem Abtastelement am Gestell des Druckers;

Fig. 6 eine Prinzipdarstellung einer Tabelleneintragung für das Zeichen «E» für die Druckposition 0 beim Hammer H0 unter Beachtung eines Divisors und eines neuen Indexes I bei unterschiedlichen Entfernungswerten zwischen der Bezugsmarkierung auf dem Typenband und dem Abtastelement;

Fig. 7 eine Prinzipdarstellung eines sogenannten «FIFO»-Speichers;

Im Zusammenhang mit Fig. 1 wurden bereits die Begriffe «Subscan» und «Subscan-Gruppe» unter Beachtung der Hammerteilung und der Zeichenteilung auf dem umlaufenden Typenträger beschrieben. Wenn auch im gewählten Ausführungsbeispiel eine Subscan-Gruppe fünf Hämmer umfasst, der in ihrer gesamten Breite vier Zeichen auf dem Typenträger gegenüberstehen, so kann diese Proportion auch eine andere sein.

In Fig. 2 ist das Blockschaltbild einer mikroprozessorgesteuerten Adapterschaltung gezeigt. Diese Adapterschaltung versteht sich als eine Steuerschaltung des im angelsächsischen Sprachgebrauch üblichen sogenannten «Open-Loop»-Typs (Steuerkreis im Sinne eines offenen Regelkreises). Diese Adapterschaltung ist für Steuervorgänge anwendbar, welche durch einen Mikroprozessor bezüglich ihres zeitlichen Ablaufes vorausberechnet werden. Als besonders günstiges Anwendungsgebiet sind Druckhammersteuerungen zu nennen.

Im folgenden wird die in Fig. 2 dargestellte Adapterschaltung in Bezug auf Druckhammersteuerungen erklärt.

Grundsätzlich dient diese Adapterschaltung der Anpassung eines relativ langsamen Mikroprozessors an relativ schnelle Drucker. Sie ist insbesondere dafür geeignet, universell für beliebige Zeilendrucker unterschiedlicher Druckhammer- bzw. Zeichenteilungen eingesetzt werden zu können. Diese universelle Einsatzmöglichkeit basiert auf einer entsprechenden Programmierung, in der sich die Besonderheiten der verschiedenen Prinzipien zur Bestimmung der Druckzeitpunkte widerspiegeln. Durch die Verwendung entsprechender Steuerprogramme können die früher üblichen druckerspezifischen Hardwaresteuerschaltungen entfallen.

Die in Fig. 2 dargestellte Adapterschaltung muss eine Pufferfunktion unter Berücksichtigung der eigentlichen Druckzeiten und der Druckpausen aufweisen. Der Mikroprozessor muss auf den Durchschnittswert der beiden zuvor angegebenen Werte (der Druckzeiten und der Druckpausen) ausgelegt sein. Hierin liegt bereits die zuvor erwähnte Anpassungsfunktion des Mikroprozessors an den schnellen Drucker. Würde der Mikroprozessor nur auf die hohen Geschwindigkeitswerte des Druckers ausgelegt werden, ohne Berücksichtigung der auftretenden Druckpausen, so erforderte dies einen aufwendigeren Mikroprozessor und somit höhere Kosten. Wesentliche Bestandteile der Adapterschaltung sind zwei sogenannte «FIFO»-Speicher 201 und 202 (FIFO = first in/first out), welche asynchron betrieben werden. Speicher dieser Art gestatten eine Dateneingabe zu freien Zeitpunkten (unter Berücksichtigung des Systemzyklus) und eine Datenausgabe in der Reihenfolge der beiden Eingaben zu ebenfalls beliebigen Zeitpunkten. Solche «FIFO»-Speicher sind allgemein bekannt und im Handel verfügbar (z.B. als MM 67401 von der Firma MONOLYTHIC MEMORY).

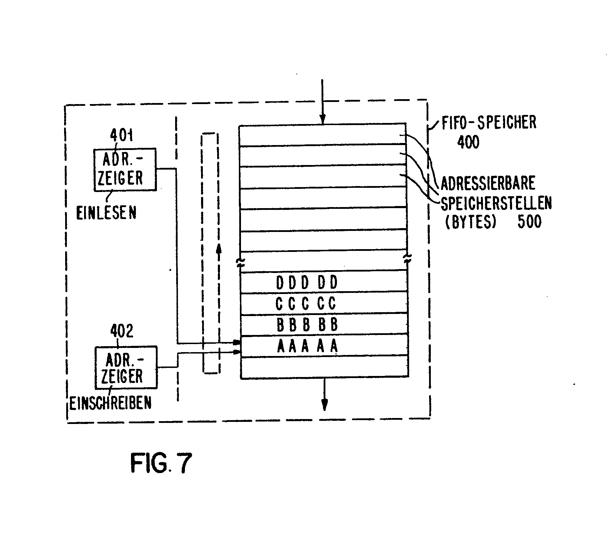

Solche «FIFO»-Speicher können nach verschiedenen Prinzipien arbeiten. Eines dieser Prinzipien ist schematisch in Fig. 7 dargestellt. Der Speicher 400 besteht aus einer Reihe von adressierbaren Speicherstellen, z.B. Bytes. Für das Einschreiben von Information in diese Bytes ist ein Adresszeiger 401 und für das Auslesen von Information aus diesem Byte ist ein Adresszeiger 402 vorgesehen.

Diese Adresszeiger stellen Adressregister dar zur Steuerung des Zugriffs auf bestimmte Speicherstellen. Die Adresssteuerung eines solchen «FIFO»-Speichers erfolgt derart, dass das Einschreiben von Information in aufeinanderfolgende Speicherstellen, z.B. in Pfeilrichtung erfolgt, und dass das Auslesen von Information aus diesen Speicherstellen ebenfalls in angegebener Pfeilrichtung durchgeführt wird. Durch entsprechende Adresssteuerung ist sicherzustellen, dass nach jedem Schreib- bzw. Lesebefehl die Byteadresse des Adresszeigers in Pfeilrichtung um 1 verändert, und dass auch nur etwas ausgelesen werden kann, was zuvor auch eingeschrieben wurde. Im Falle des erstmaligen Einschreibens von Information in den «FIFO»-Speicher haben die Adressen im Zeiger 1 und 2 den gleichen Wert. Nach einem solchen Einschreibvorgang kann ein erneuter Einschreibvorgang an eine um 1 veränderte Adresse oder auch ein Auslesevorgang unter der unveränderten Adresse erfolgen. Es können beliebig Einlesvorgänge unmittelbar aufeinanderfolgen, Ein- und Auslesevorgänge können aber auch alternativ oder unregelmässig einander abwechseln. Das Ein- und Auslesen von Information aus dem «FIFO»-Speicher ist zyklusgebunden. Während eines Zyklus c kann wahlweise während einer ersten Zyklushälfte c1h beim Einschreiben von Information und während einer zweiten Zyklushälfte c2h beim Auslesen von Speicherinformation erfolgen. Das Ein- und Auslesen wird deshalb asynchron genannt, weil das Einschreiben und Auslesen während eines Speicherzyklus wahlweise erfolgen kann. Durch entsprechende Adresssteuerung ist sichergestellt, dass die zuerst eingelesene Information auch zuerst ausgelesen wird (first in/first out). Bei einem erneuten Einlesebefehl würde die Information in die auf den ersten bereits beschriebenen Speicherplatz folgende um 1 erhöhte Adresse geschrieben werden. Analoges gilt für den dritten, vierten, fünften Einlesebefehl etc. Unabhängig von den Zeitpunkten des Einlesens von Information in aufeinanderfolgende Speicherplätze beziehen sich die Auslesebefehle auf die gleiche Reihenfolge der Speicherplätze, in welche vorausgehend Information eingeschrieben wurde.

Andere «FIFO»-Speicher können so organisiert sein, dass eine eingegebene Information ähnlich wie in einem Schieberegister an einen Speicherplatz verschoben wird, der noch nicht belegt ist. Auf diese Art und Weise werden die eingegebenen Informationen in aufeinanderfolgende Adressen für das Auslesen bereit gehalten. Das Auslesen erfolgt wieder in der Reihenfolge der eingegebenen Information. D.h., z.B. die an fünfter Stelle eingegebene Information kann mit dem fünften Lesebefehl ausgelesen werden. Die in Fig. 2 dargestellten «FIFO»-Speicher 201 und 202 empfangen ihre Eingabedaten von dem Mikroprozessor 200 über die Schnittstellenschaltung 204. Wie die Datenausgabe aus einem Mikroprozessor erfolgt,

ist allgemein bekannt und auch nicht Gegenstand dieser Erfindung und wird deshalb auch nicht näher beschrieben. Die Schnittstellenschaltung 204 zwischen dem Mikroprozessor 200 und den beiden «FIFO»-Speichern 201 und 202 ist erforderlich, um die unterschiedlichen Schnittstellen-Eigenschaften einander anzupassen.

Die vom Mikroprozessor 200 gelieferten Daten enthalten für den «FIFO»-Speicher 201 die Zeitwerte, zu denen bestimmte Druckhämmer gefeuert werden sollen. Der «FIFO»-Speicher 202 hingegen erhält Steuerinformation bezogen auf bestimmte Hammeradressen, wie Hammersetz- oder Rücksetzpulse oder Echoanforderungen für Signale, die bestätigen, dass ein Hammer gefeuert wurde.

Das Auslesen der Steuerinformation aus dem «FIFO»-Speicher 202 geschieht wie folgt. Durch eine Anforderungsschaltung 205, welche z.B. durch einen Zähler gebildet werden kann, wird nach Ablauf einer bestimmten Zeit, z.B. nach Erreichen eines bestimmten Zählerstandes, welcher dem als nächstes aus dem «FIFO»-Speicher 201 auszulesenen und dort gespeicherten Zeitwert entspricht durch eine mit der Anforderungsschaltung 205 und dem «FIFO»-Speicher 201 verbundene Vergleichsschaltung 206 eine dem «FIFO»-Speicher 202 nachgeschaltete Torschaltung aktiviert. Die dem Zeitwert aus dem «FIFO»-Speicher 201 korrespondierende Steuerinformation wird dann aus dem «FIFO»-Speicher 202 ausgelesen und über die Torschaltung 207 auf die Hammersteuerschaltung 208 weitergeleitet. Die Vergleichsschaltung 206 kann in bekannter herkömmlicher Art vorzugsweise aber durch eine Exklusiv-ODER-Schaltung realisiert werden, während die Torschaltung 207 in einfacher Weise durch ein einfaches UND-Glied gebildet werden kann.

Die Hammersteuerschaltung 208 ist herkömmlich, wie sie z.B. in Druckern des Typs IBM 3203, 3262 verwendet wird. Ihre Funktion liegt darin, aufgrund vorliegender Steuerangaben, wie Hammeradresse, Echoanforderung, Hammersetzen oder -rücksetzen entsprechende Druckhämmer zu vorgegebenen Zeitpunkten anzusteuern.

Der bisher beschriebene Schaltungsteil in Fig. 2 kann in vorteilhafter Weise erweitert werden, z.B. durch einen dritten «FIFO»-Speicher 203, der mit dem «FIFO»-Speicher 202 verbunden ist. Der «FIFO»-Speicher 203 kann zum Rücksetzen einzelner Druckhämmer benutzt werden. Diese Funktion erfolgt im Zusammenwirken des «FIFO»-Speichers 203 mit einer Zählersteuerung 209. Der «FIFO»-Speicher 202 ist über eine Leitung 214 mit dem «FIFO»-Speicher 203 verbunden. Von der Zählersteuerung 209 gehen Verbindungsleitungen 216 und 217 zum «FIFO»-Speicher 203, dessen Ausgang 215 mit der Hammersteuerung 208 verbunden ist. Die Einführung des dritten «FIFO»-Speichers 203 bringt für den zweiten «FIFO»-Speicher 202 eine zeitliche Entlastung: Wenn bisher (ohne dritten «FIFO»-Speicher 203) die Steuerinformation für das Setzen und Rücksetzen aus dem zweiten «FIFO»-Speicher 202 kam, soll jetzt die Aufforderung zum Rücksetzen der Druckhämmer dem dritten «FIFO»-Speicher 203 zugeordnet werden. Dies kann z.B. dadurch geschehen, dass vom zweiten «FIFO»-Speicher 202 über die Leitung 214 an den dritten «FIFO»-Speicher 203 eine Information gegeben wird, wann das Setzen der Hämmer erfolgt. Diese Information wird mit Hilfe der Zählersteuerung 209 entsprechend verzögert und die verzögerte Information wird über die Leitung 215 zum Rücksetzen der adressierten Hämmer benutzt. Da die zeitliche Verzögerung der in den «FIFO»-Speicher 203 eingegebenen Information mit Hilfe eines Zählvorganges ein jedermann verständlicher Vorgang ist, soll hier von weiterer Erklärungen abgesehen werden.

Die zeitliche Entlastung des «FIFO»-Speichers 202 folgt daraus, dass dieser nun nicht mehr die Steuerwerte für das Rücksetzen der Hämmer ausgeben muss, sondern dass diese aus den Setzwerten der Druckhämmer durch zeitliche Verzögerung über den «FIFO»-Speicher 203 abgeleitet werden.

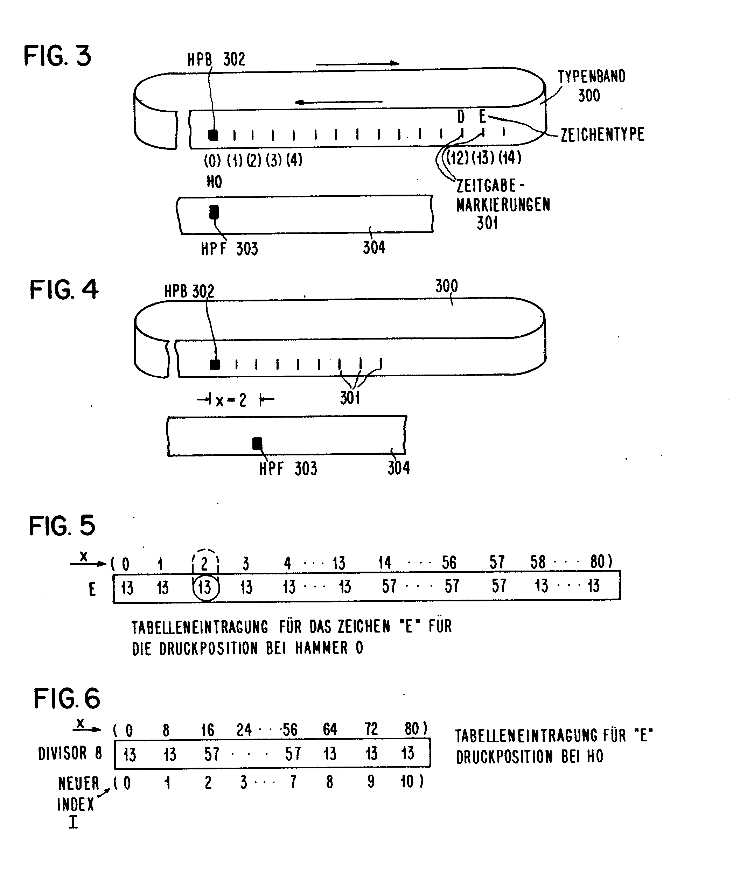

In Fig. 3 ist eine Prinzipdarstellung eines umlaufenden Typenbandes gezeigt. Ein solches Typenband 300 kann ein Stahlband mit erhaben herausgeätzten Zeichentypen sein, wie es in den üblicherweise bekannten Stahlbanddruckern, z.B. des Typs IBM 3262 der Fall ist. Auf dem Stahlband ist eine Spur mit den abzudruckenden Zeichen und eine Spur mit Zeitgabemarkierungen 301 vorhanden. Jedem Zeichen ist eine Zeitgabemarkierung zugeordnet. Diese Markierungen werden elektronisch oder magnetisch zur Erzeugung von Signalen abgetastet (durch das Abtastelement HPF 303), durch welche der Zeitpunkt des Ausdrucks des der Zeitgabemarkierung zugeordneten Zeichen festgelegt wird.

Die Bewegungsrichtung des umlaufenden Typenbandes 300 ist durch Pfeile gekennzeichnet. Um jederzeit eine Aussage zur Stellung des umlaufenden Typenbandes gegenüber dem festen Druckergestell(-rahmen) 304 machen zu können, ist auf dem Typenband 300 eine besondere Markierung HPB 302 an der Stelle einer Zeitgabemarkierung angebracht. Diese Markierung HPB 302 sei Startpositionsmarkierung genannt. Durch diese Startpositionsmarkierung wird der Beginn von Zählvorgängen für die Druckersteuerung bezügliche der Zeitgabemarkierungen festgelegt.

Die Markierung HPB 302 ist elektronisch von den Zeitgabemarkierungen unterscheidbar. Sie hat aber neben der Funktion, die Startposition festzulegen auch die Funktion einer üblichen Zeitgabemarkierung, d.h. auch hier ist eine Zeichentype zugeordnet.

Beim Vorbeibewegen der Markierungen HPB 302 und der Zeitgabemarkierungen 301 werden durch das Abtastelement HPF 303 Signale erzeugt, die beginnend mit dem HPB Signal Zählvorgängen zuführbar sind.

In Fig. 4 ist das Typenband 300 zu einem Zeitpunkt gezeigt, in dem es sich um den Weg zweier Zeitgabemarkierungen am Abtastelement HPF 303 vorbeibewegt hat.

Diese relative Verschiebung zwischen HPB und HPF ist mit x = 2 gekennzeichnet.

Die möglichen Verschiebewerte sind im folgenden weiterhin mit x bezeichnet. Diese Verschiebewerte sind wesentlich für die folgend beschriebene Druckhammersteuerung.

Die den einzelnen Zeichen auf dem Typenband 300 zugeordneten Zeitgabemarkierungen sind mit (0), (1), (2), (3), etc. gekennzeichnet. Das folgend als Beispiel mehrfach erwähnte Zeichen «E» steht an 13. Position (13).

Es wurde bereits erwähnt, dass vor dem Ausdrucken von Information eine Angabe darüber verfügbar sein muss, welches Zeichen in welcher Druckposition zum Abdruck gelangen soll.

Es wurde weiterhin ausgeführt, dass die Druckhammersteuerung über ein elektronisches Abbild verfügen muss, welches Zeichen des Typenträgers sich zu einem bestimmten Zeitpunkt an welcher Druckposition befindet.

Wenn es nun gilt, z.B. das Zeichen «E» in der Druckposition 0 bei Hammer H0 auszudrucken, so kann dies nur zu bestimmten Zeitpunkten erfolgen, die aus dem in den Fign. 5 bzw. 6 angegebenen Tabellen entnommen werden können.

Aus Vereinfachungsgründen sei angenommen, dass die Druckposition 0 bei Hammer H0 an der Stelle von HPF 303 liegt.

Soll während der Ablaufsteuerung das Zeichen «E» an der Position 0 bei Hammer H0 ausgedruckt werden, so muss das System Zugriff auf jenen Teil der Tabelle nehmen, der für das Zeichen «E» und die Druckposition 0 bei Hammer H0 zuständig ist. (Dieser Tabellenteil ist in Fig. 5 bzw. Fig. 6 wiedergegeben.) Je nach der augenblicklichen relativen Lage der Markierungen HPB und HPF lässt sich dieser Tabelle ein Wert entnehmen, für den ein Ausdrucken des gewünschten Buchstabens «E» in der gewünschten Druckposition H0 möglich ist. Es wurde bereits angedeutet, dass der Wert x als Verschiebewert ein Zählwert und somit auch ein Zeitwert ist, der auf die Zählung von Zeitgabemarkierungen zurückgeht. Der entsprechende Zählvorgang wird mit dem Auftreten eines von der HPB Markierung abgeleiteten Signales gestartet. Während des Zählvorganges wird ein Zähler durch die über das Abtastelement HPF 303 erzeugten Zeitgebermarkierungssignale aufwärts gezählt. Den Tabelleneintragungen aus den Fign. 5 bzw. 6 ist zu entnehmen, zu welchen Zählerständen x das Zeichen «E» in der gewünschten Druckposition bei Hammer H0 ausgegeben werden kann. Diese Zählerstände erscheinen im umrandeten eigentlichen Tabellenteil. Bei jedem dieser Werte ist in aufsteigender Reihenfolge ein x Wert in ebenfalls aufsteigender Reihenfolge (startend bei 0, fortgeführt über 1, 2, 3, 4, etc. und endend bei 80) gedacht zugeordnet. Diese x Werte wurden bereits als Verschiebewerte zwischen HPB und HPF definiert. Der Wert x = 80 würde in diesem Ausführungsbeispiel der auf dem Zeichenband angeordneten Zeichenzahl von 0 bis 80 entsprechen.

Die Gesamtheit der Tabelle besteht aus einer Vielzahl von Tabellenteilen gemäss Fig. 5 bzw. Fig. 6. Für jedes Zeichen an jeder Druckposition sind entsprechende Tabelleneintragungen erforderlich.

Gemäss Fig. 5 kann das Zeichen «E» für folgende Zählerstände (gezählt werden die Zeitgabemarkierungen 301) an der Druckposition H0 ausgedruckt werden: 13 und 57. Hierbei wird vorausgesetzt, dass das Zeichen «E» zweimal auf dem Typenband 300 vorhanden ist, nämlich an (13). und (57).ter Stelle. Beträgt die Verschiebung x = 0, so kann das Zeichen «E» an (13).ter Position des Typenbandes erst zu einem späteren Zeitpunkt ausgedruckt werden, wenn die Zählung der Zeitgabemarkierungen 301 (startend bei HBP 302) den Wert 13 ergibt. Analoges gilt für einen Verschiebewert x = 1. Auch hier kann das Ausdrucken des Buchstabens «E» erst dann erfolgen, wenn sich ein Zählerstand für die Zeitgabemarkierungen 301 von 13 ergibt. Mit anderen Worten: das Typenband 300 muss sich zwischenzeitlich soweit fortbewegt haben, dass das Zeichen «E» (bis H0), nämlich an der HPF Position erscheint. Analoges gilt für den Verschiebewert x = 2 bis x = 13. Beträgt die Verschiebung zwischen HPB und HPF mehr als x = 13, so ist ein erneutes Ausdrucken des Zeichens «E» erst bei einem Zählwert der Zeitgabemarkierungen von 57 möglich. Dies hat den bereits erwähnten Grund, dass das Zeichen «E» auch ein zweites Mal auf dem Typenband, nämlich in (57).ter Position vorhanden ist. Somit kann das Zeichen «E» in der Druckposition bei Hammer H0 für die Verschiebewerte x = 14 bis 57 nur dann ausgedruckt werden, wenn der Zählerstand 57 erreicht wurde. Bei einer weiteren Verschiebung zwischen HPB und HPF von x = 58 bis 80 ist das Zeichen «E» in der Druckposition bei Hammer H0 erst dann wieder ausdruckbar, wenn der Zählerstand von 13 während eines erneuten Zählerzykluses (startend bei HPB 302) erreicht wird. Ein solcher Zählerzyklus erfasst einen vollen Bandumlauf.

Die Tabelleneintragungen gemäss Fig. 5 können dadurch reduziert werden, indem einander mehrfach sich wiederholende Tabellenwerte, wie z.B. die Werte 13 oder 57, zusammengefasst werden. Ausgehend von einem zu definierenden neuen Index I0 bis I0 (gedachte Werte wie in der unteren Zeile in Fig. 6) werden diesem neuen Index I gedachte Verschiebewerte x (obere Zeile in Fig. 6) zugeordnet. Die eigentlichen Tabelleneintragungen in Fig. 6 für das Zeichen «E» für die Druckposition bei Hammer H0 erscheinen wieder im umrandeten Teil und lauten 13 13 57 ..... 57 13 13. Soll nun aus der Tabelle für einen x Wert, der zwischen den angegebenen x Werten 0, 8, 16, 24, etc. liegt, ein zugehöriger Tabellenwert aufgesucht werden, so wird zunächst der vorgegebene x Wert durch einen vorgegebenen Divisor (in diesem Falle 8) dividiert.

Dieser Divisor muss so gewählt werden, dass das Divisionsergebnis zu den gleichen Tabellenwerten führt, wie sie in Fig. 5 aufgeführt sind. Das Divisionsergebnis wird abgerundet und dafür der in der Tabelle zugehörige Wert ausgelesen.

Beispiel:

x = 9

9:8 = 1,1 abgerundet = 1

daraus folgt der Wert für den neuen Index I = 1.

Für I = 1 wird der Tabelle der Tabellenwert 13 entnommen. Durch Vergleich mit den Angaben in Fig. 5 kann festgestellt werden, dass für x = 9 ein Tabellenwert von 13 zu berücksichtigen ist. Sich bei der Division ergebende Rundungsfehler werden durch anschliessenden Vergleich des Tabellenwertes (in diesem Beispiel 13) mit dem Verschiebewert (x = 9) korrigiert: Ist der Verschiebewert grösser als der Tabellenwert, wird der Tabellenwert mit dem nächsten neuen Index (I + 1) für die weitere Rechnung verwendet. (Beispiel: Verschiebewert x = 15 ⇒ I = 2 ⇒ Tabellenwert 13 ⇒ (15 > 13) ⇒ I + 1 ⇒ Tabellenwert 57).

Die bisherige Beschreibung bezieht sich auf Hammer 0. Die Rechnung für die Hämmer > 0 wird wie folgt ausgeführt:

1. Vom momentanen Verschiebewert des Druckbandes wird vor Ausführung der oben erwähnten Berechnung ein Wert ΔH abgezogen. ΔH ist die als Verschiebewert gekennzeichnete Zeit, die ein Zeichen benötigt, um von dem entsprechenden Hammer zum Hammer 0 (Referenzpunkt) zu gelangen. Die Konstanten ΔH für alle Hämmer sind in einer Tabelle enthalten.

2. Zu dem resultierenden Tabellenwert wird ΔH addiert.

Der Vorteil der reduzierten Tabelle liegt ausser in der Speicherplatzeinsparung auch im schnellen Zugriff im Vergleich zu ungekürzten Tabellen.

Mit Hilfe solcher Tabelleneintragungen sind einfache Voraussagen möglich, zu welchen Zeitpunkten (entsprechend der Zählwerte der Zeitgabemarkierungen) bestimmte Zeichen an bestimmten Druckpositionen wiedergegeben werden können. Es ist verständlich, dass diese Informationen in relativ kurzer Zeit zur Verfügung zu stellen sind. Durch Verwendung eines Mikroprozessors in Verbindung mit der beschriebenen Adapterschaltung werden die Zeitwerte bereitgestellt («FIFO»-Speicher 201), zu denen bestimmte Hämmer entsprechend anzusteuern sind. Durch die feste Zuordnung der Zeitgabemarkierungen und Zeichen auf dem Typenband ist ein positionsgerechtes Ausdrucken der Zeichen sichergestellt, der Ausdruckvorgang von dem Zeitgabemarkierungssignal geprägt wird.

Bei dem «Gangfiring-Prinzip» ist es möglich, dass während eins Subscans mehrere Hämmer gleichzeitig gefeuert werden. Dies bedeutet, dass für einen Zeitwert (aus «FIFO»-Speicher 201) mehrere Hammeradressen (aus «FIFO»-Speicher 202) zugeordnet werden müssen.

Die Ablaufsteuerung nach dem «Rippleprint-Prinzip» weist einige Besonderheiten auf. Um zu erreichen, dass pro Subscan nicht mehrere Hämmer gleichzeitig zu feuern sind, werden zusätzliche Unterschiede in der Teilung der Hämmer bzw. der Zeichen auf dem Typenträger vorgesehen. Dadurch ergeben sich Verzögerungen der Feuerzeitpunkte gegenüber dem «Gangfiring-Prinzip». Die Berechnung der Feuerzeitpunkte, wie sie im Zusammenhang mit dem «Gangfiring-Prinzip» beschrieben wurde, kann jedoch beibehalten werden unter Hinzufügung einer speziellen Ergänzung:

Es ist eine Tabelle vorzusehen, in der die Verzögerungswerte für die einzelnen Hämmer gespeichert sind. Diese Tabelle wird einmalig hinsichtlich der Verzögerungswerte als Ordnungsbegriff in aufsteigender Reihenfolge sortiert. Die Berechnung der Feuerzeitpunkte pro Hammer erfolgt in der Sortierfolge der Tabelle (nicht in beliebiger Reihenfolge wie beim «Gangfiring-Prinzip»). Bei der Aufstellung einer Tabelle für die Feuerzeitpunkte für jeden Subscan (in aufsteigender Reihenfolge) werden die den Hämmern zuzuordnenden Verzögerungswerte (in aufsteigender Reihenfolge) vermerkt.

Ein zusätzlicher Sortierlauf, um von einer gedachten aufsteigenden Hammerfolge (jedem Hammer ist ein Verzögerungswert zugeordnet) zu einer aufsteigenden Folge von Verzögerungswerten zu kommen, entfällt somit. Sich für die Feuerzeitpunkte auswirkende mechanische oder elektrische Toleranzen können durch Korrektur-Verzögerungswerte in der Tabelle ausgeglichen werden.

Eine aufwendige mechanische Flugzeitjustage ist dadurch nicht mehr erforderlich. Die auftretenden Flugzeitschwankungen brauchen lediglich einmal messtechnisch erfasst werden und können dann wie beschrieben programmtechnisch berücksichtigt werden.

**Patentansprüche**

1. Steuereinrichtung für einen Zeilendrucker mit einem umlaufenden Zeichenträger und mit den einzelnen Druckpositionen zugeordneten Druckhämmern, und mit einem von einem Mikroprozessor ladbaren Speicher für die Druckhammersteuerinformation, wobei Druckhämmer und Zeichen eine unterschiedliche Teilung aufweisen und die Zeichenposition auf dem Zeichenträger durch die Entfernung der Zeichen gegenüber einer Referenzmarke HPB auf dem Zeichenträger festgelegt ist und die Verschiebung x des umlaufenden Zeichenträgers gegenüber einem feststehenden Referenzpunkt am Druckerrahmen als Abstand der Referenzmarkierung HPB auf dem Zeichenträger zu einer Referenzmarkierung HPF auf dem Druckerrahmen bestimmbar ist, dadurch gekennzeichnet, dass der Speicher zwei asynchron betreibbare «FIFO»-Speicher (201, 202) («FIFO» = first in, first out) umfasst, wobei der erste «FIFO»-Speicher (201) mit den Werten für die Feuerzeitpunkte der Druckhämmer und der zweiten «FIFO»-Speicher (202) mit den Feuerzeitpunkten zugeordneter Steuerinformation wie Druckhammeradresse und die Steuerung der Druckhämmer betreffenden Befehlen ladbar ist, und dass eine Anforderungsschaltung (205) vorgesehen ist, durch die nacheinander die Zeitwerte aus dem ersten «FIFO»-Speicher (201) ausgelesen und eine Torschaltung (207) zugeführt werden zum Durchschalten der diesen Zeitwerten zuge-

ordneten Steuerinformation aus dem zweiten «FIFO»-Speicher (202) zur Steuerung der Druckhämmer, und dass für jedes Zeichen in der Druckposition im ersten «FIFO»-Speicher (201) für äquidistant aufeinanderfolgende ganzzahlige Verschiebewerte, deren Differenz > 1 ist (z.B. $x = 0$, $x = 8$, $x = 16$ etc.), die Entfernungen D des Zeichens zur Referenzmarkierung HPB auf dem Zeichenträger in eine Tabelle mit einem zugeordneten Divisor fortlaufend eingetragen werden (z.B. 13, 13, 57, 57 etc.), und dass das abgerundete Ergebnis der Division eines beliebigen ganzzahligen Verschiebewertes $\Delta H$, wobei $\Delta H$ der Verschiebewert eines Zeichens für eine vorgesehene Druckposition gegenüber der ersten möglichen mit der Referenzmarkierung HPF identischen Druckposition ist, durch den Divisor einen Tabellenindex $I_K$ für einen diesem zugeordneten Entfernungswert $D_K$ des Zeichens ergibt ($K = 0$, 1, 2, 3...), und dass für $x < D_K$ der Entfernungswert $D_K$, für $x > D_K$ der Entfernungswert $D_{K+1}$ für den Index $I_{K+1}$ als gewünschter Entfernungswert ausgelesen wird, und dass der Feuerzeitpunkt für das Zeichen nach Zurücklegen dieser Entfernung bezüglich der Referenzmarkierung HPF zuzäglich des Verschiebewertes $\Delta H$ erfolgt.

2. Anordnung nach Anspruch 1, dadurch gekennzeichnet, dass der zweite «FIFO»-Speicher (202) mit einem dritten «FIFO»-Speicher (203) zur Aufnahme von Steuerinformation verbunden ist, welche zählergesteuert (209) in Abhängigkeit von der Steuerinformation des zweiten «FIFO»-Speichers (202) zur Steuerung der Ausgangsgrössen ausgelesen wird.

3. Anordnung nach Anspruch 1 und 2, dadurch gekennzeichnet, dass im zweiten «FIFO»-Speicher (202) die Steuerinformation für das Setzen und im dritten «FIFO»-Speicher (203) die Steuerinformation für das Rücksetzen der Druckhämmer gespeichert ist.

4. Anordnung nach Anspruch 1, dadurch gekennzeichnet, dass die Anforderungsschaltung (205) ein Zähler ist.

5. Anordnung nach einem der Ansprüche 1 oder 4, dadurch gekennzeichnet, dass zum Auslesen der Zeitwerte aus dem ersten «FIFO»-Speicher (203) eine mit diesem und der Anforderungsschaltung (205) verbundene Vergleichsschaltung (206) vorgesehen ist, deren Ausgang mit der Torschaltung (207) verbunden ist.

6. Anordnung nach Anspruch 5, dadurch gekennzeichnet, dass die Vergleichsschaltung (206) eine Exclusiv-Oder-Schaltung ist.

7. Anordnung nach Anspruch 1, dadurch gekennzeichnet, dass die Entfernungs- und Verschiebewerte vom umlaufenden Typenträger her ableitbare relative Zeitwerte sind.

8. Anordnung nach Anspruch 1 oder 7, dadurch gekennzeichnet, dass sich für die Feuerzeitpunkte verschiedener Druckhämmer auswirkende mechanische oder elektrische Toleranzen unter Fortfall einer entsprechenden Justage durch zusätzliche Aufnahme druckhammerspezifischer Korrektur-Verzögerungswerte in die Tabelle zur Ermittlung der Feuerzeitpunkte ausgeglichen werden.

**Claims**

1. Control device for a line printer comprising a revolving character carrier and print hammers associated with the individual print positions, as well as a memory, loadable by a microprocessor, for the print hammer control information, wherein print hammers and characters have different pitches, and the character position on the character carrier is determined by the distance of the characters from a reference mark HPB on the character carrier, and the displacement x of the revolving character carrier relative to a fixed reference point on the printer frame is determined as the distance of the reference mark HPB on the character carrier from a reference mark HPF on the printer frame, characterized in that the memory comprises two asynchronously driven «FIFO» buffers (201, 202) («FIFO» = first in, first out), the first «FIFO» buffer (201 being loaded with the values of the firing times of the print hammers and the second «FIFO» buffer (202) being loaded with control information associated with the firing times, such as print hammer address, and with print hammer control commands, and that a request circuit (205) is provided, by means of which the time values are successively read from the first «FIFO» buffer (201) and are fed to a gate circuit (207) for switching the control information associated with these time values from the second «FIFO» buffer (202) for controlling the print hammers, and that for each character in the print position in the first «FIFO» buffer (201) for successive equidistant integral displacement values, whose difference is > 1 (e.g., $x = 0$, $x = 8$, $x = 16$, etc.), the distances D of the character from the reference mark HPB on the character carrier are continuously entered into a table with an associated divisor (e.g., 13, 13, 57, 57, etc.), and that the rounded result of the division of an arbitrary integral displacement value $x - \Delta H$, where $\Delta H$ is the displacement value of a character for a given print position relative to the first possible print position identical with the reference mark HPF, by the divisor yields a table index $I_K$ for a distance value $D_K$ of the character associated therewith ($K = 0$, 1, 2, 3...), and that the desired distance value read for $x < D_K$ is the distance value $D_K$, while the desired distance value read for $x < D_K$ is the distance value $D_{K+1}$ for the index $I_{K+1}$, and that the character is fired after it has travelled that distance relative to the reference mark HPF plus the displacement value $\Delta H$.

2. Device according to claim 1, characterized in that the second «FIFO» buffer (202) is connected to a third «FIFO» buffer (203) for accommodating control information which, under counter control (209) as a function of control information of the second «FIFO» buffer (202), is read for controlling the output values.

3. Device according to claims 1 and 2, characterized in that the control information for setting and resetting the print hammers is stored in the second «FIFO» buffer (202) and the third «FIFO» buffer (203), respectively.

4. Device according to claim 1, characterized in that the request circuit (205) is a counter.

5. Device according to any one of the claims 1 or 4, characterized in that for reading the time values from the first «FIFO» buffer (201), a compare circuit (206), connected to said buffer and the request circuit (205), is provided, whose output is connected to the gate circuit (207).

6. Device according to claim 5, characterized in that the compare circuit (206) is an exclusive-OR circuit.

7. Device according to claim 1, characterized in that the distance and displacement values are relative time values derived from the revolving type carrier.

8. Device according to claim 1 or 7, characterized in that mechanical or electrical tolerances influencing the firing times of the different print hammers are compensated for by additionally accommodating print hammer specific correction delay values in the table for determining the firing times, thus eliminating adjustments.

## Revendications

1. Dispositif de commande pour une imprimante ligne par ligne comportant un porte-caractères rotatif et des marteaux d'impression associés aux différentes positions d'impression, et une mémoire chargeable par un microprocesseur pour l'information de commande des marteaux d'impression,

les matériaux d'impression et les caractères présentant un écartement différent et la position des caractères sur le porte-caractères étant déterminée par leur distance par rapport à une marque de référence HPB du porte-caractères et le déplacement x du porte-caractères rotatif par rapport à un point de référence fixe sur le châssis de l'imprimante pouvant être déterminé en tant que distance du marquage de référence HPB sur le porte-caractères vis-à-vis d'un marquage de référence HPF sur le châssis de l'imprimante, caractérisé par le fait que la mémoire comporte deux mémoires «FIFO» (201, 202) fonctionnant de façon asynchrone («FIFO» = first in, first out), la première mémoire «FIFO» (201) stockant les valeurs des moments d'actionnement des marteaux d'impression et la seconde mémoire «FIFO» (202) des informations de commande associées aux moments d'actionnement, comme l'adresse des marteaux d'impression et les ordres concernant la commande des marteaux d'impression, et qu'il est prévu un circuit de demande (205) par lequel les valeurs des moments sont extraites les unes après les autres de la première mémoire «FIFO» (201) et appliquées à un circuit-porte (207) pour faire passer les informations de commande associées à ces valeurs de moments de la seconde mémoire «FIFO» (202) à la commande des marteaux d'impression,

et que pour chaque caractère à la position d'impression de la première mémoire «FIFO» (201) pour des valeurs de déplacement entières se succédant à équidistance et dont la différence est $> 1$ (par exemple $x = 0$, $x = 8$, $x = 16$, etc.), les distances D du caractère par rapport au marquage de référence HPB sur le porte-caractères sont portées en continu dans un tableau avec un diviseur y associé (par exemple 13, 13, 57, 57, etc.),

et que le produit arrondi de la division d'une valeur de déplacement entière quelconque $x - \Delta H$, $\Delta H$ étant la valeur du déplacement d'un caractère pour une position d'impression prévue par rapport à la première position d'impression possible identique au marquage de référence HPF, par le diviseur donne un index de tableau $I_K$ pour une valeur de distance $D_K$, associée à celui, du signe ou caractère ($K = 0, 1, 2, 3...$), et que pour $x < D_K$ la valeur de la distance $D_K$, pour $x > D_K$ la valeur de distance $D_{K+1}$ pour l'index $I_{K+1}$ est extraite comme valeur de distance désirée, et que le moment d'actionnement pour le caractère intervient après parcours de cette distance relativement au marquage de référence HPF y compris la valeur du déplacement $\Delta H$.

2. Dispositif selon la revendication 1, charactérisé par le fait que la seconde mémoire «FIFO» (202) est reliée à une troisième mémoire «FIFO» (203) pour la réception de l'information de commande qui, commandée par compteur (209), est extraite en fonction de l'information de commande de la seconde mémoire «FIFO» (202) pour la commande des grandeurs de sortie.

3. Dispositif selon les revendications 1 et 2, caractérisé par le fait que dans la seconde mémoire «FIFO» (202) est mémorisée l'information de commande pour le positionnement et dans la troisième mémoire «FIFO» (203) l'information de commande pour le retour en arrière des marteaux d'impression.

4. Dispositif selon la revendication 1, caractérisé par le fait que le circuit de demande (205) est un compteur.

5. Dispositif selon l'une des revendications 1 ou 4, caractérisé par le fait que pour l'extraction des valeurs des moments hors de la première mémoire «FIFO» (201) il est prévu un circuit comparatif (206) relié à celle-ci et au circuit de demande (205) et dont la sortie est raccordée au circuit porte (207).

6. Dispositif selon la revendication 5, caractérisé par le fait que le circuit comparatif (206) est un circuit OU exclusif.

7. Dispositif selon la revendication 1, caractérisé par le fait que les valeurs des distances et des déplacements sont des valeurs de temps relatives pouvant être dérivées du porte-caractères rotatif.

8. Dispositif selon la revendication 1 ou 7, caractérisé par le fait que les tolérances mécaniques ou électriques intervenant sur les moments d'actionnement des différents marteaux d'impression sont compensées, tout en supprimant un ajustage approprié par l'enregistrement supplémentaire dans le tableau de valeurs de temporisation correctives spécifiques aux marteaux pour la détermination des moments d'actionnement.

## FIG. 1

**ABZUDRUCKENDE ZEICHEN** — BEWEGUNGSRICHTUNG — TYPENTRÄGER 100 — 1. SUBSCAN (T1)

101 102 103 104 105 106 107 108 109 110

| H0 | H1 | H2 | H3 | H4 | H5 | H6 | H7 | H8 | H9 | H10 | H11 | |
| 0 | 1 | 2 | 3 | 4 | 5 | 6 | 7 | 8 | 9 | 10 | 11 | |

SUBSCAN-GRUPPE I — SUBSCAN-GRUPPE II — SUBSCAN-GRUPPE III

DRUCKHAMMER-POSITIONEN

**ABZUDRUCKENDE ZEICHEN** — BEWEGUNGSRICHTG. — 100 — 2. SUBSCAN (T2)

101 102 103 104 105 106 107 108 109 110

| H0 | H1 | H2 | H3 | H4 | H5 | H6 | H7 | H8 | H9 | H10 | H11 | |

SUBSCAN-GRUPPE I — SUBSCAN-GRUPPE II — SUBSCAN-GRUPPE III

DRUCKHAMMER-POSITIONEN

## FIG. 2

MIKROPROZESSOR — 200

SCHNITTSTELLENSCHALTUNG — 204

201 — FIFO SPEICHER — NÄCHSTES WORT — FIFO SPEICHER — 202

210 — 214

205 — ANFORD. SCHLTG.
206 — VER-GLEICH
207 — TOR-SCHLTG.
208 — HAMMER-STEUERG.

203 — FIFO SPEICHER — 215

217 — 216

209 — ZÄHLER-STEUERG.

FIG. 3

HPB 302

TYPENBAND
300

D E

ZEICHENTYPE

(0) (1) (2) (3) (4)

(12)(13)(14)

HO

ZEITGABE -
MARKIERUNGEN
301

HPF 303                    304

FIG. 4

HPB 302                                    300

301

⊣|x = 2 |⊢

HPF 303            304

FIG. 5

x → ( 0    1    (2)    3    4 ··· 13    14 ··· 56    57    58 ··· 80 )

E    13   13   (13)   13   13 ··· 13    57 ··· 57    57    13 ··· 13

TABELLENEINTRAGUNG FÜR DAS ZEICHEN "E" FÜR
DIE DRUCKPOSITION BEI HAMMER 0

FIG. 6

x → ( 0    8    16    24 ·· 56    64    72    80 )

DIVISOR 8   13   13   57 · · · 57   13   13   13        TABELLENEINTRAGUNG FÜR "E"
                                                        DRUCKPOSITION BEI H0

NEUER   ( 0    1    2    3 ··· 7    8    9    10 )
INDEX
I

FIG. 7